**Europäisches Patentamt**

**European Patent Office**

**Office européen des brevets**

(19)

(11) Numéro de publication : **0 466 555 A1**

## (12) DEMANDE DE BREVET EUROPEEN

(21) Numéro de dépôt : **91401815.5**

(22) Date de dépôt : **02.07.91**

(51) Int. Cl.⁵ : **H04L 12/40, G06F 13/36**

(30) Priorité : **13.07.90 FR 9008952**

(43) Date de publication de la demande :
**15.01.92 Bulletin 92/03**

(84) Etats contractants désignés :
**DE GB**

(71) Demandeur : **THOMSON-CSF**
**51, Esplanade du Général de Gaulle**
**F-92800 Puteaux (FR)**

(72) Inventeur : **Masoni, Marc**
**Thomson-CSF, SCPI, Cedex 67**
**F-92045 Paris La Défense (FR)**

(74) Mandataire : **Turlèque, Clotilde et al**
**THOMSON-CSF SCPI**
**F-92045 PARIS LA DEFENSE CEDEX 67 (FR)**

(54) **Réseau local d'intercommunication de modules de traitement de données.**

(57) Le réseau local d'intercommunication de modules de traitement de données comporte un premier bus B1 superviseur pour transmettre les communications de contrôle et un deuxième bus B2, à haut débit pour transmettre les communications de données brutes ; le bus B1 est réalisé classiquement et peut comporter un arbitrage centralisé ; le bus B2 comporte trois types de lignes (1, 2, 3) de transmission des informations sur lesquelles sont connectés au moins un module maître (10) et autant de modules esclaves (20 à 20n) que de modules de traitement de données (30 à 30n) auxquels ils sont reliés. Un seul module maître est actif à la fois ; il coordonne les transferts entre les modules de traitement des données (30 à 30n) selon une séquence programmée par le bus superviseur B1, les transferts étant effectués par blocs successifs de taille déterminée et les caractéristiques des transferts étant distribuées entre les différents modules esclaves. Les modules esclaves sont programmés par le bus superviseur B1 pour effectuer à chaque transfert les actions d'échanges de données sur le bus B2.
Application au traitement de données.

EP 0 466 555 A1

Jouve, 18, rue Saint-Denis, 75001 PARIS

FIG.1

Le domaine de l'invention est celui des réseaux locaux de mise en communication de modules de traitement de données, permettant à chaque module d'envoyer des données à un autre module connecté au réseau, et de recevoir du réseau les données qui lui sont adressées.

Ces modules de traitement de données peuvent être par exemple des cartes processeurs, dites "calculateurs", ou des interfaces vers d'autres réseaux de communication ayant des caractéristiques différentes du premier réseau (par exemple des réseaux longue distance).

Les calculateurs sont notamment utilisés pour effectuer du traitement du signal, c'est-à-dire pour réaliser sur un signal un certain nombre d'opérations successives sur des données qui arrivent en nombre important. Quand un calculateur même de forte puissance ne suffit pas, il faut mettre en oeuvre le traitement par plusieurs calculateurs qui doivent donc inter-communiquer.

Il existe des réseaux d'intercommunication de calculateurs constitués par un bus de données linéaire ou circulant fermé, sur lequel viennent se connecter des calculateurs abonnés qui communiquent avec le bus à travers des circuits tampons d'entrée/sortie. Ces bus ont généralement recours à un arbitrage d'accès centralisé, ce qui particularise un ou plusieurs des abonnés. D'autre part, la bande passante totale, et donc le débit total est partagé entre les différents abonnés, ce qui limite le nombre d'abonnés raccordables.

Il existe également des réseaux permettant une décentralisation de l'arbitrage d'accès. Dans ces réseaux chaque abonné détecte par lui-même si le bus est libre, et résout les problèmes de collision. Ces réseaux décentralisés existants présentent l'inconvénient d'utiliser une partie de la bande passante disponible pour la transmission des données entre les abonnés pour résoudre les problèmes de collision.

Enfin, il existe des réseaux constitués de plusieurs liaisons monodirectionnelles formant un réseau circulant ou fermé, munis d'un système d'arbitrage décentralisé qui ne consomme pas de bande passante. Ces réseaux sont avantageux pour l'interconnexion d'unités de calcul, ou machines (ensembles autonomes de cartes processeurs) car, la répartition des traitements entre ces unités étant généralement quasi-statique, la topologie du réseau peut être optimisée, une fois pour toutes, en fonction des besoins de communications. Cependant, ces réseaux présentent l'inconvénient d'avoir des performances variables en fonction de la position, dans la topologie du réseau, des abonnés qui communiquent.

Dans les gros systèmes de traitement d'informations en temps réel (radars, sonars, ...) en particulier, les quantités d'informations à échanger sont énormes. Les réseaux doivent assurer le transit de ces informations en plus des échanges classiques propres à tout système informatique distribué.

La nature des communications, dans le cas notamment d'un gros système de traitement de données en temps réel dans lequel un grand nombre de modules sont interconnectés, sont de deux types : les communications dites de "contrôle" qui permettent de synchroniser les modules, d'échanger des résultats macroscopiques (globaux) ou des informations d'état ; et les communications dites de "données brutes" qui sont les données à traiter, des tableaux de résultats intermédiaires, les tableaux de résultats à sortir et les téléchargements de programmes ou de tables de paramètres et de calculs.

Les communications de contrôle, en raison de leur caractère aléatoire et de leur niveau de priorité élevé nécessitent que la programmation de chaque module de traitement de données soit la plus indépendante possible de celle des autres modules du point de vue des entrées/sorties, et que n'importe quel module puisse envoyer un nombre de données quelconque vers un sous-ensemble quelconque des autres modules à n'importe quel moment. Ces exigences conduisent à utiliser un bus comportant un arbitrage d'accès centralisé qui peut être complexe, augmente donc la complexité de l'interface au bus et le nombre de lignes du bus et diminue le temps disponible pour les transferts à cause de la durée des arbitrages. Le débit de ce type de bus dit "superviseur" est donc faible.

Les communications de données brutes sont échangées de manière permanente et récurrente et leur déroulement est organisé par le programmeur lors de l'élaboration de l'architecture logicielle du système. Elles n'ont donc pas le caractère aléatoire des communications de type "contrôle" et elles constituent, par essence, une relation de dépendance entre les processus élaborés dans les différents modules de traitement de données, donc entre les programmes de ces modules. Dans le cas où le débit des échanges est élevé, pour ces communications de données il est primordial d'utiliser un bus permettant un débit rapide et dont la bande passante disponible est utilisée au mieux.

De plus pour ces deux types de communication, il est souhaitable que la quantité de composants allouée à l'interface au bus soit réduite afin que les modules aient une grande puissance de traitement et il est également souhaitable que le nombre de lignes du bus soit réduit afin de simplifier la connectique ou de permettre la connexion des modules de traitement de données à d'autres réseaux de communication.

Ces deux types de communication ont des exigences contradictoires que les réseaux existants ne permettent pas de satisfaire au mieux. Notamment, d'une part l'utilisation d'un bus comportant un arbitrage d'accès centralisé est suffisant lorsque la quantité d'informations à échanger est faible, tel que c'est le cas pour les communications de contrôle et pour les petits systèmes, mais ce type de bus est incompatible avec les communications de données brutes lorsqu'il s'agit de gros systèmes. D'autre part, les réseaux permettant une décentralisation de l'arbitrage d'accès ne présentent pas non plus un débit suffisant car la bande passante du bus est partagée avec un système anti-collisions.

L'invention a donc pour objet un réseau local à haut débit permettant notamment de pallier les divers inconvénients des réseaux existants et permettant de faciliter la mise en oeuvre des gros systèmes de traitement d'informations.

Pour cela, l'invention consiste à réaliser un réseau local d'intercommunication comportant deux types de bus d'interconnexion : un premier type de bus dit "superviseur", destiné à être utilisé pour les communications de type contrôle et pouvant être réalisé de manière classique par exemple à l'aide d'un bus comportant un arbitrage, et un deuxième type de bus à haut débit destiné à être utilisé pour les communications de type "données brutes" qui ne comporte pas d'arbitrage et présente une électronique d'interface simple, un nombre de lignes réduit et une bande passante disponible utilisée au mieux.

Selon l'invention, le réseau local d'intercommunication de modules de traitement de données, notamment de calculateurs, destiné à transmettre des informations de contrôle et de données brutes, caractérisé en ce qu'il comporte :
   – au moins un premier bus B1, dit superviseur, destiné à transmettre les communications de contrôle,
   – au moins un deuxième bus B2, à haut débit, destiné à transmettre les communications de données brutes et comportant trois types de lignes de transmission des informations sur lesquelles sont connectés au moins un module maître et autant de modules esclaves que de modules de traitement des données auxquels ils sont reliés, un seul module maître étant actif à la fois, ledit module maître actif étant destiné à coordonner des transferts de données brutes entre les modules de traitement des données selon une séquence programmée par le bus superviseur B1, les transferts étant effectués les uns après les autres par blocs successifs de taille déterminée et les caractéristiques des transferts étant distribuées entre les différents modules esclaves, lesdits modules esclaves étant programmés par le bus superviseur B1 pour effectuer à chaque transfert les actions d'échanges de données sur le bus B2.

D'autres particularités et avantages de l'invention apparaîtront clairement dans la description suivante donnée à titre d'exemple non limitatif et faite en regard des figures annexées qui représentent :
   – la figure 1, le schéma de principe du réseau local d'intercommunication, selon l'invention,
   – la figure 2, un exemple de fonctionnement du bus d'intercommunication, selon l'invention,
   – la figure 3, la programmation, par le bus superviseur B1, du module maître actif, pour l'exemple de la figure 2,
   – la figure 4, la programmation, par le bus superviseur B1, des modules esclaves, pour l'exemple de la figure 2,
   – la figure 5, un exemple de réalisation du module maître, selon l'invention,
   – la figure 6, un exemple de réalisation du module esclave, selon l'invention.

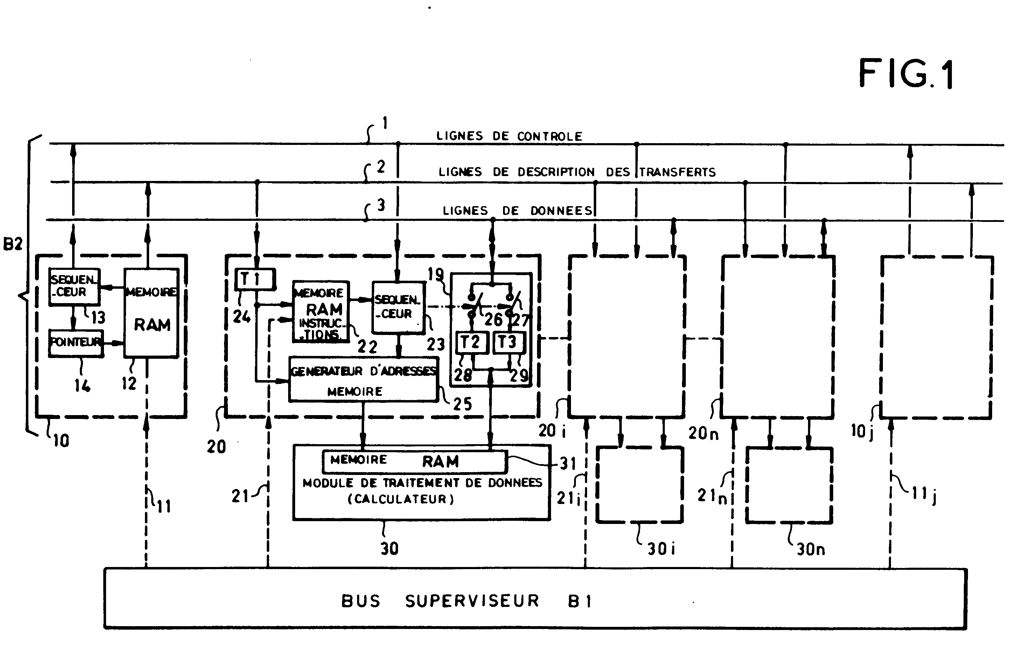

La figure 1, représente le schéma de principe du réseau local d'intercommunication, selon l'invention. Le réseau comprend au moins un bus B1 superviseur, de principe connu mais non décrit, et au moins un bus B2 à haut débit, comprenant trois types de lignes sur lesquelles circulent les informations. Ces lignes sont des lignes de contrôle, 1, des lignes de description des transferts, 2, et des lignes de données 3. Sur ces différentes lignes sont connectés deux sortes de modules : des modules maîtres, 10j, et des modules esclaves, 20i, les modules esclaves étant associés à des modules de traitement de données, 30i.

Les deux types de bus communiquent entre eux via des liaisons 11j, 21i, i étant un indice variant de 1 à n, et n représentant le nombre de modules de traitement de données reliés au bus B2, j étant un indice variant de 1 à p, p étant le nombre de modules maîtres du bus B2. Le bus B1 superviseur au bus B2, les caractéristiques des transferts à effectuer entre des modules de traitement de données, ou calculateurs abonnés 30i, et pour chaque transfert, la nature de l'opération à réaliser.

Le bus B2 est équipé d'au moins un module maître 10 et d'autant de modules esclaves 20i que de modules de traitement de données dits calculateurs 30i, et n'importe quel calculateur 30i, peut être équipé d'un module maître 10j. Lorsque le bus comporte plusieurs modules maîtres, un seul doit être actif à la fois ; aussi, parmi les lignes de contrôle, 1, se trouve une ligne qui assure l'exclusion mutuelle des modules maîtres dans le cas où un ou plusieurs bus superviseurs tenteraient d'activer plusieurs de ces modules simultanément.

Le module maître actif 10 génère l'horloge interne du bus B2 et gère les transferts de données ; il utilise pour cela les lignes de contrôle 1 et les lignes de description des transferts 2, alors que les modules esclaves utilisent les informations circulant sur les lignes 1 et 2 et exécutent les transferts de données entre les lignes de données 3 et les calculateurs 30i.

Le module maître 10, comprend essentiellement, connectés en série, une mémoire RAM 12, un séquenceur 13 et un pointeur de transfert, 14. La mémoire RAM 12 reçoit, via la liaison 11 avec le bus superviseur B1, les caractéristiques des transferts à effectuer. Ces caractéristiques sont la taille, la source et la destination des transferts à effectuer correspondant respectivement au nombre de blocs à transmettre, au numéro de l'émetteur (c'est-à-dire le numéro du calculateur émetteur des données à transmettre), et à un code appelé numéro de phase permettant de particulariser le transfert.

Le numéro d'émetteur et le numéro de phase sont ensuite transmis à tous les modules esclaves, 20i, sur les lignes de description des transferts 2, alors que le nombre de blocs est transmis de la mémoire 12 vers le séquenceur 13 qui l'utilise pour gérer le pointeur de transferts, 14.

Au début de chaque transfert, le nombre de blocs correspondant à ce transfert et inscrit dans la mémoire 12 est copié dans un compteur de blocs interne au séquenceur, 13. Lorsqu'il n'y a plus de blocs à transférer, le séquenceur, 13, incrémente le pointeur de transferts 14 qui vient alors pointer un nouveau transfert dans la liste puis active une des lignes de contrôle, 1, pour indiquer aux modules esclaves 20i que les caractéristiques d'un nouveau transfert sont présentes sur les lignes de description des transferts, 2.

Le séquenceur 13 a également pour rôle de créer l'horloge du bus B2 sur une des lignes de contrôle 1. Cette horloge est utilisée par les modules esclaves 20i pour synchroniser les échanges de données.

Au début effectif de chaque transfert, les modules esclaves émetteurs des données activent une des lignes de contrôle, 1, et le séquenceur 13 ajoute alors un demi-cycle d'horloge à la durée normale du cycle d'horloge afin d'augmenter le temps disponible pour les commutations d'émetteurs par rapport au temps normalement alloué au transfert de chaque donnée. Ce dernier temps peut donc être rendu minimum et la bande passante des lignes du bus est ainsi mieux utilisée.

Le module esclave, 20 comprend essentiellement un registre tampon T1, 24, recevant les caractéristiques de chaque transfert à effectuer et les resynchronisant, une mémoire RAM 22 dite "mémoire d'instructions ", un séquenceur 23, un générateur d'adresses mémoire 25 pour la mémoire 31 du calculateur 30 et une interface 19 de transfert des données entre le bus B2 et le calculateur 30. L'interface 19 de transfert des données est schématisée sur la figure 1 par des commutateurs 26, 27 destinés à sélectionner le sens de transmission des données et par des registres tampons T2, 28 et T3, 29, destinés à synchroniser les données.

La mémoire RAM 22 reçoit, par l'intermédiaire du registre tampon T1, 24, le numéro de phase correspondant à chaque transfert, et via la liaison 21 avec le bus superviseur B1, l'instruction à exécuter pour chaque transfert. Cette instruction fait partie d'un jeu de trois instructions possibles qui sont : émettre des données sur le bus B2, recevoir des données du bus B2, ne rien faire, ces instructions étant respectivement notées EMI, REC, NOT. Dans le cas où l'instruction pointée par le numéro de phase dans la mémoire 22 est EMI, le numéro d'émetteur issu des lignes de description des transferts 2 est comparé à un numéro d'abonné préalablement à l'exécution du transfert. Le numéro d'abonné est câblé sur chacun des calculateurs abonnés 30 et est spécifique à chacun d'eux. Il permet d'éviter un conflit sur les lignes de données 3 dans le cas où plusieurs abonnés posséderaient une même instruction EMI pour un même numéro de phase.

L'instruction issue de la mémoire 22 est utilisée par le séquenceur 23 pour gérer le générateur d'adresses mémoire 25 et les commutateurs 26 et 27. Lorsque le générateur d'adresses mémoire 25 est activé par le séquenceur 23, c'est-à-dire lorsque l'instruction issue de la mémoire 22 n'est pas NOT, il utilise le numéro de phase issu des lignes de transfert 2 pour déterminer l'adresse des données situées dans une mémoire 31 interne au calculateur abonné, 30. Le générateur d'adresses mémoire 25 fournit à la mémoire 31 du calculateur abonné 30 des signaux de contrôle, tels que des signaux de lecture ou d'écriture, et des signaux d'adresse permettant d'y ranger ou d'y extraire les données à transférer.

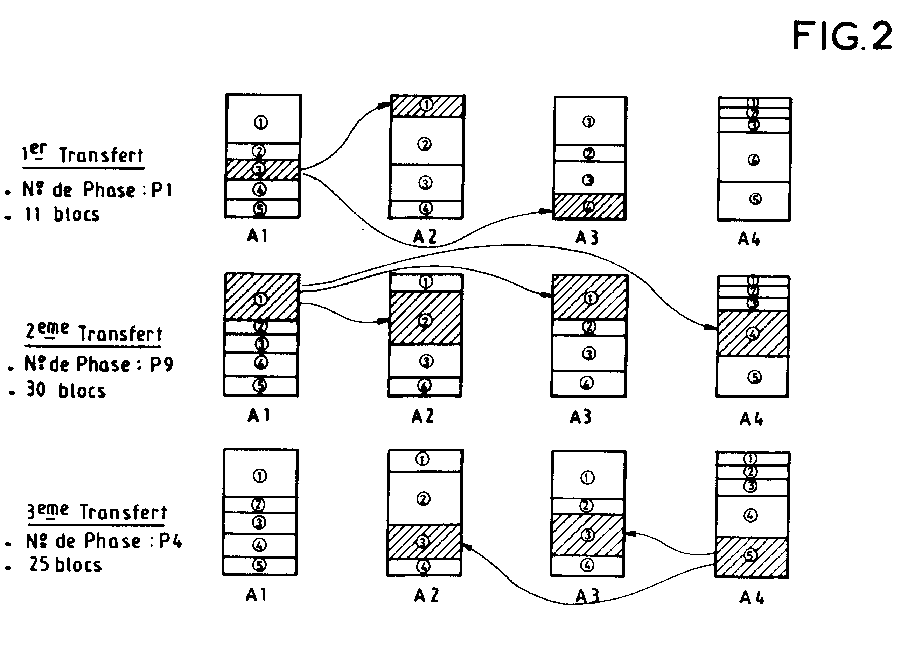

La figure 2 montre un exemple de fonctionnement du bus d'intercommunication, selon l'invention, dans le cas où trois transferts doivent être réalisés entre des sous-ensembles d'un groupe de quatre abonnés notés A1, A2, A3, A4 ; ces trois transferts devant être réalisés successivement à partir d'un seul ordre de lancement appliqué par le bus superviseur B1 au module maître actif 10.

Dans cet exemple, la mémoire 31 de chacun des calculateurs abonnés 30 est partitionnée en zones dites "buffers", dont la description est contenue dans une mémoire du générateur d'adresses, 25. Chaque buffer comporte un nombre entier de blocs dont la taille est figée par la réalisation. Les trois transferts à réaliser entre les quatre calculateurs abonnés A1, A2, A3, A4, sont les suivants :

1°) 11 blocs du buffer 3 de l'abonné A1 vers le buffer 1 de l'abonné A2 et vers le buffer 4 de l'abonné A3.

2°) 30 blocs du buffer 1 de l'abonné A1 vers le buffer 2 de l'abonné A2, le buffer 1 de l'abonné A3 et le buffer 4 de l'abonné A4.

3°) 25 blocs du buffer 5 de l'abonné A4 vers le buffer 3 de l'abonné A3 et le buffer 3 de l'abonné A2.

Les numéros de phase associés respectivement à ces trois transferts sont par exemple P1, P9, et P4.

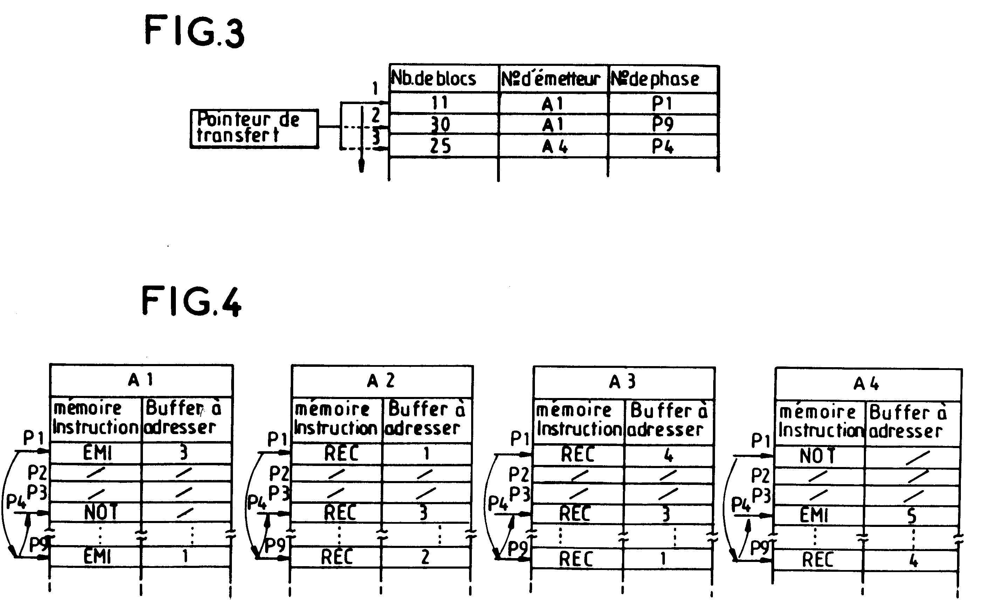

La figure 3 montre la programmation, par le bus B1 superviseur, du module maître actif pour la réalisation des transferts de la figure 2. La mémoire 12 du module maître 10 contenant la liste des transferts à réaliser doit être programmée par le bus superviseur B1 de la façon suivante : les première, deuxième, troisième lignes décrivent respectivement les caractéristiques des premier, deuxième et troisième transferts à effectuer. Ces lignes contiennent le nombre de blocs, le numéro d'émetteur et le numéro de phase de chacun des transferts à effectuer. Par exemple pour réaliser les transferts précédemment cités, la première ligne correspondant au premier transfert contient un nombre de blocs égal à 11, un numéro d'émetteur égal à A1 et un numéro de phase égal à P1. De même, la deuxième ligne a un nombre de blocs égal à 30, un numéro d'émetteur égal à A1 et un numéro de phase égal à P9. Enfin la troisième ligne a un nombre de blocs égal à 25, un numéro d'émetteur égal à A4 et un numéro de phase égal à P4.

Ainsi, à partir d'un seul ordre de lancement appliqué au module maître 10 par le bus superviseur B1 les trois transferts sont réalisés successivement grâce au pointeur 14 qui compte pour chaque transfert, donc pour chaque numéro de phase, le nombre de blocs déjà transmis et qui passe au transfert programmé suivant lorsque le dernier bloc correspondant au numéro de phase en cours est transféré.

La figure 4 montre la programmation, par le bus superviseur B1, des modules esclaves 20 des quatre abonnés A1, A2, A3, A4, pour la réalisation des transferts de la figure 2. Les mémoires instruction 22 des modules esclaves 20 des abonnés A1, A2, A3, A4 ainsi que les mémoires de description de buffer incluses dans les générateurs d'adresses 25 de ces mêmes modules esclaves doivent être programmées par le bus superviseur B1. Les mémoires instruction 22 sont adressées par les lignes de numéro de phase issues des lignes de description des transferts 2, elles-mêmes activées par le module maître en service conformément au contenu de sa mémoire 12 programmée selon la figure 3. Dans cet exemple, les numéros de phase P1, P4 et P9 étant les seuls susceptibles d'être émis par le module maître en service, seules les adresses des mémoires 22 correspondant à ces numéros de phase sont à programmer. Durant le premier transfert, le numéro de phase émis par le module maître en service est P1 et l'abonné A1 doit émettre, tandis que les abonnés A2 et A3 doivent recevoir les données émises par A1. A l'adresse P1 les mémoires d'instruction 22 et de gestion de buffer des abonnés sont donc programmées de la manière suivante : l'abonné A1 a une instruction EMI et un numéro de buffer à adresser égal à 3.

L'abonné A2 a une instruction REC et un numéro de buffer à adresser égal à 1.

L'abonné A3 a une instruction REC et un numéro de buffer à adresser égal à 4.

L'abonné A4 a une instruction NOT et un numéro de buffer à adresser qui reste vierge. Les adresses P4 et P9 des mémoires d'instruction 22 et des mémoires de gestion de buffer sont programmées de la même façon que pour l'adresse P1 conformément à la figure 4, c'est-à-dire que pour l'adresse P4 les abonnés A1, A2, A3, A4 ont respectivement une instruction NOT, REC, REC, EMI et un numéro de buffer à adresser égal respectivement à rien, 3, 3, 5. Pour l'adresse P9 les abonnés A1, A2, A3, A4 ont respectivement une instruction EMI, REC, REC, REC, et un numéro de buffer à adresser égal respectivement à 1, 2, 1, 4.

A titre d'exemple non limitatif, il a été réalisé un réseau d'intercommunication ayant les caractéristiques suivantes : 32 lignes de données, 4 lignes de contrôle, 10 lignes de description des transferts, une taille de blocs de données égale à 32 mots soit 128 octets, un nombre d'abonnés inférieur ou égal à 16, une vitesse d'utilisation maximale égale à 48 M octets/seconde ce qui correspond à une distance maximale entre deux abonnés quelconques connectés au bus B2 inférieure à la largeur d'une baie électronique de 19 pouces, soit inférieure à 44 cm.

Les 4 lignes de contrôle sont les suivantes :
– une ligne sur laquelle circulent les signaux dits "MASTCLK" correspondant à l'horloge du bus créée par le module maître actif.
– une ligne où circulent les signaux "MASTSEL" qui indique que l'un des modules maîtres est en service et qui interdit l'activation d'un autre module maître.
– une ligne où circulent les signaux "BUSY" qui indique que des données sont en transit sur le bus et qui est activée par l'abonné émetteur avec la première donnée transmise et désactivée pendant le cycle où la dernière donnée est transmise.
– une ligne sur laquelle circulent les signaux "STATVAL" qui est active pendant un cycle et qui indique que de nouvelles informations sont présentes sur les lignes de description des transferts.

Les 10 lignes de description de transferts sont les suivantes :
– 4 lignes concernent le numéro d'émetteur et permettent de désigner un émetteur parmi les 16 abonnés possibles.
– 5 lignes concernent le numéro de phase et permettent à chacun des 16 abonnés de sélectionner une action parmi 32 possibles.
– une ligne de parité qui porte sur les 9 lignes de description précitées.

Les 32 lignes de données assurent le transfert des données entre les différents abonnés.

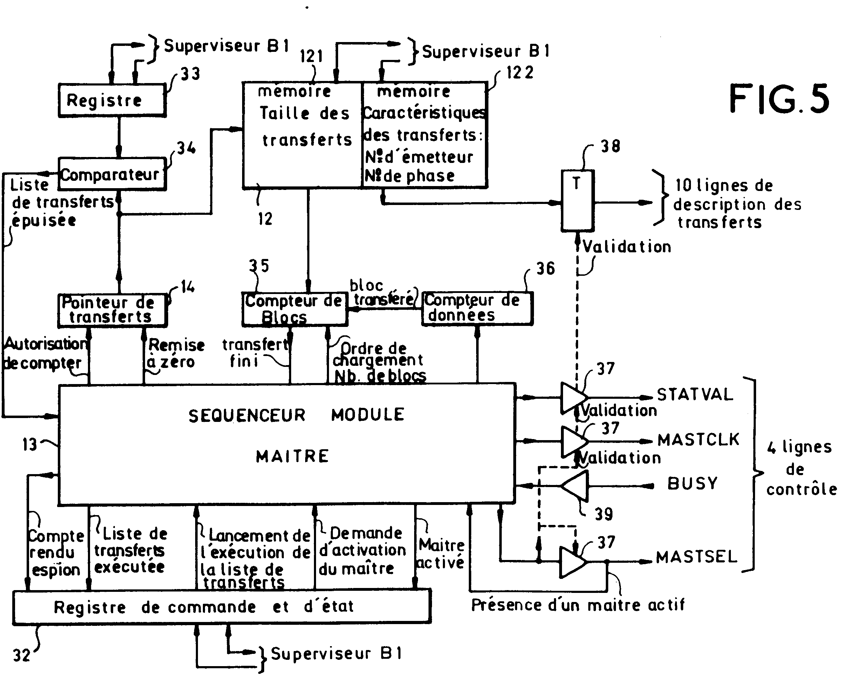

La figure 5 représente un exemple de réalisation d'un module maître, selon l'invention.

Le module maître 10 comprend :
– un registre de commande et d'état 32, qui est accessible au bus B1 superviseur pour activer le module maître, lancer l'exécution de la liste des transferts, lire l'état du module maître, c'est-à-dire
   – voir si le module maître est actif, ou s'il y a une erreur de double activation,
   – voir si la liste des transferts est exécutée,
   – faire un compte rendu d'espionnage lorsque le module maître n'est pas en service et qu'un autre module maître gère des échanges sur le bus B2. Vérifier le bon fonctionnement du bus B2.

– un séquenceur 13 qui contrôle toutes les fonctions du module maître soit :

    – créer les signaux MASTCLK et STATVAL,

    – activer le signal MASTSEL lors d'une programmation par le bus B1 superviseur, si un autre maître n'est pas déjà actif sur le bus B2,

    – gérer différents compteurs en utilisant le signal BUSY,

    – donner un compte rendu de fonctionnement du module maître au bus B1 superviseur, par l'intermédiaire du registre de commande et d'état 32.

– une mémoire RAM 12 contenant la liste des transferts à effectuer et leurs caractéristiques. Cette mémoire 12 est composée de 2 sous champs :

    – un premier sous-champ 121, de 7 bits qui indique le nombre de blocs à transférer, c'est-à-dire la taille des transferts,

    – un deuxième sous-champ 122, de 9 bits qui contient le numéro d'émetteur et le numéro de phase qui caractérisent les transferts composant la liste.

– un compteur (ou pointeur) de transferts 14 qui pointe un des transferts de la liste contenue dans la mémoire 12. Ce compteur est initialisé lors du lancement de l'exécution de la liste et est incrémenté lorsque le transfert pointé dans la liste a été exécuté.

– un registre 33 indiquant le nombre de transferts que contient la liste de la mémoire 12. Ce registre est initialisé par le bus B1 superviseur avant le lancement de l'exécution de la liste.

– un comparateur 34 qui compare la valeur du pointeur de transferts 14 à la valeur du registre 33 contenant le nombre de transferts de la liste et indique au séquenceur 13 si la liste de transferts est épuisée ou non.

– un compteur de blocs 35, chargé au début de chaque transfert par le nombre de blocs à transférer issu du champ 121 de la mémoire 12. Il est décrémenté à chaque fois qu'un bloc a été transféré et indique au séquenceur 13 si le transfert pointé par le pointeur de transfert 14 est terminé ou non.

– un compteur de données 36 qui compte le nombre de données transférées afin d'indiquer au compteur de blocs 35 si un bloc complet a été transféré ou non. Ce compteur 36 est autorisé à compter par le séquenceur 13 pendant le transfert effectif des données sur le bus B2. Le nombre de données par bloc est déterminé une fois pour toute et est égal à 32 mots dans l'exemple présent.

– des buffers de signaux 37 laissant passer les signaux d'activation des lignes de contrôle seulement si le module maître est actif,

– un buffer 39 laissant toujours passer le signal BUSY et le remettant en forme,

– un registre tampon T, 38 permettant d'activer les lignes de description des transferts 2 quand le module maître est actif et créant un signal de parité.

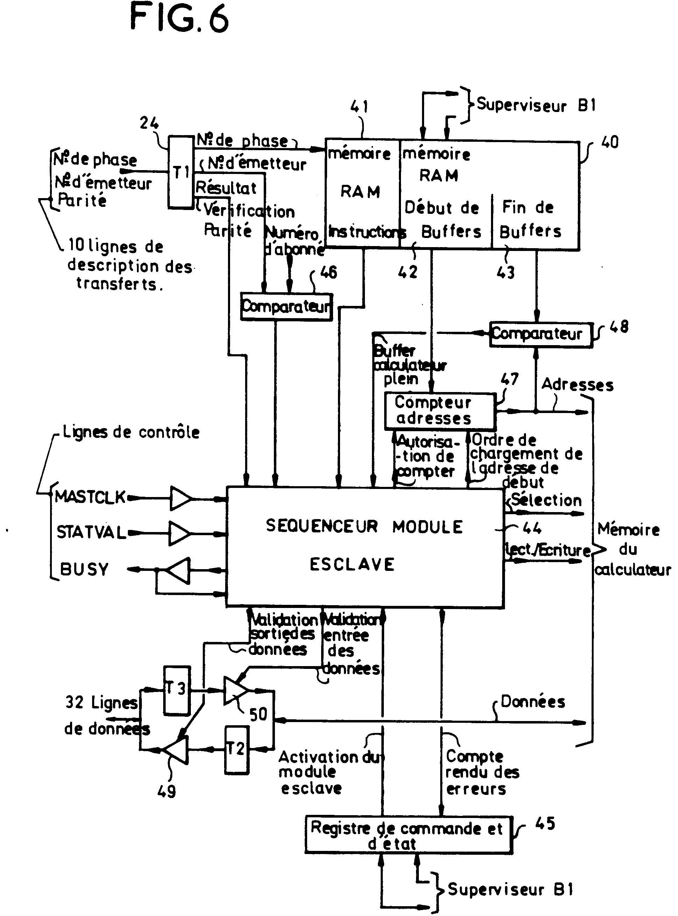

La figure 6 représente un exemple de réalisation d'un module esclave, selon l'invention.

Le module esclave comprend :

– un séquenceur 44 qui gère l'ensemble du module esclave,

– une mémoire RAM 40 de 32 mots de 18 bits, divisée en 3 sous-champs 41, 42, 43. Le sous-champ 41 constitue la mémoire d'instruction 22 de la figure 1. Il contient, pour chaque numéro de phase, la nature de l'opération à réaliser, codée sur 2 bits. Les opérations possibles sont :

    – NOT : aucune opération

    – REC : recevoir des données du bus B2 et les écrire dans la mémoire du calculateur 30

    – EMI : lire des données dans la mémoire 31 du calculateur 30 et les émettre sur le bus B2.

Les sous champs 42 et 43 sont des éléments du générateur d'adresses 25 de la figure 1. Ils indiquent, pour chaque numéro de phase, la zone de la mémoire 31 du calculateur 30 qui contient, ou qui doit recevoir, les données à transférer. Dans le cas où, pour un numéro de phase donné, le champ instruction 41 contient l'instruction NOT, les champs 42 et 43 n'ont pas de signification. Si l'instruction est EMI ou REC, le champ 42 contient l'adresse, dans la mémoire 31, du premier bloc à transférer et le champ 43 contient l'adresse, dans la mémoire 31, du dernier bloc à transférer.

    – un registre tampon 24 recevant les informations provenant des lignes de description des transferts 2. Il resynchronise et vérifie la parité des deux caractéristiques correspondant au numéro d'émetteur et au numéro de phase, et les transmet respectivement vers un comparateur 46 et vers la mémoire 40. Le résultat de la vérification de la parité est transmis au séquenceur 44. Si la parité est mauvaise, un drapeau d'erreur est levé dans un registre d'état 45, relié au séquenceur 44 et une instruction NOT est exécutée.

    – un comparateur 46 ayant deux entrées et recevant, sur l'une de ses entrées, le numéro d'émetteur issu des lignes de description des transferts 2 par l'intermédiaire du registre tampon 24 et, sur son autre entrée, le numéro d'abonné du module esclave, câblé sur chaque module esclave et spécifique à chacun d'eux. Le résultat de la comparaison effectuée par le comparateur 46 est transmis au séquenceur 44. Si le résultat de la comparaison est FAUX et l'instruction est EMI, alors une instruction NOT sera exécutée au lieu de l'instruction EMI. Si l'instruction est REC ou NOT, le résultat de la comparaison est ignoré.

– un compteur d'adresses 47 et un comparateur associé 48 qui constituent avec les 2 sous-champs 42 et 43 de la mémoire 40, le générateur d'adresses mémoire 25 de la figure 1.

Le compteur d'adresses 47 reçoit, sur ses entrées de chargement parallèle, des informations codées sur 8 bits, provenant du sous champ 42 de la mémoire 40, qui représentent l'adresse (modulo 32, c'est-à-dire 1 bloc) du début de la zone mémoire utilisateur concernée par le transfert à exécuter.

Le comparateur 48 reçoit, sur l'une de ses entrées, la sortie du compteur 47 et, sur son autre entrée, les informations codées sur 8 bits du sous champ 43 de la mémoire 40 qui représentent l'adresse (modulo 1 bloc) de la fin de la zone mémoire utilisateur concernée par le transfert à exécuter.

La sortie du comparateur 48 est transmise au séquenceur 44 qui l'utilise pour gérer les signaux de commande de la mémoire 31 du calculateur 30.

Le compteur 47 reçoit du séquenceur 44 des commandes d'autorisation de comptage et de chargement parallèle.

– des registres tampons T2 et T3 sont utilisés pour resynchroniser les données. Des buffers d'isolement 49 et 50 sont commandés par le séquenceur 44 en fonction du sens du transfert à exécuter.

L'ensemble T2, T3, 49 et 50 constitue l'interface 19 de la figure 1 pour la transmission des données entre les lignes du bus B2 et la mémoire 31 du calculateur 30.

Le séquenceur 44 gère l'ensemble du module esclave. Lorsque le signal STATVAL est activé, l'état des lignes de description des transferts 2 est mémorisé dans le registre tampon 24.

Après vérification de la parité effectuée par le registre tampon 24, le séquenceur 44 décode l'instruction issue du sous-champ 41 de la mémoire 40 et se prépare à l'exécuter dès que le transfert précédent est terminé, ce qui lui est indiqué par la désactivation du signal BUSY.

Dans le cas où l'instruction est NOT, les deux buffers 49 et 50 sont isolés dès que le transfert précédent est terminé et aucune opération n'est exécutée jusqu'à ce que le signal STATVAL soit de nouveau actif.

Dans le cas où l'instruction est EMI, le séquenceur 44 vérifie le résultat de la comparaison entre le numéro d'abonné et le numéro de phase à l'aide du comparateur 46.

Si le résultat de la comparaison est FAUX, une instruction NOT est exécutée.

Si le résultat de la comparaison est VRAI, et dès que le signal BUSY est désactivé par l'émetteur du transfert précédent, indiquant ainsi qu'il est terminé, le séquenceur 44 exécute les opérations suivantes : il donne l'ordre au compteur d'adresses 47 de charger le champ 42 de la mémoire 40, il valide le buffer 49 d'émission des données, il active les signaux de contrôle "sélection" et "lecture" de la mémoire 31 du calculateur 30, il active le signal BUSY, il autorise le compteur d'adresses 47 à compter.

L'exécution de l'instruction EMI est terminée lorsque le comparateur 48 indique que le dernier bloc de données a été transféré. Dans le cas où l'instruction est REC, et dès que le signal BUSY est désactivé, le séquenceur 44 exécute les opérations suivantes : il donne l'ordre au compteur d'adresses 47 de charger le champ 42 de la mémoire 40, il valide le buffer 50 de réception des données ; puis, dès que le signal BUSY est à nouveau actif, indiquant ainsi que l'émetteur du nouveau transfert émet sa première donnée, le séquenceur 44 active les signaux de contrôle "sélection" et "lecture" de la mémoire 31 du calculateur 30 et autorise le compteur d'adresses 47 à compter.

L'exécution de l'instruction REC est terminée dès que le comparateur 48 indique que le dernier bloc de données a été transféré ou dès que le signal BUSY est désactivé, indiquant ainsi que l'émetteur a fini d'émettre.

## Revendications

1. Réseau local d'intercommunication de modules de traitement de données, notamment de calculateurs, destiné à transmettre des informations de contrôle et de données brutes, caractérisé en ce qu'il comporte :

– au moins un premier bus B1, dit superviseur, destiné à transmettre les communications de contrôle,

– au moins un deuxième bus B2, à haut débit, destiné à transmettre les communications de données brutes et comportant trois types de lignes (1,2,3) de transmission des informations sur lesquelles sont connectés au moins un module maître (10) et autant de modules esclaves (20 à 20n) que de modules de traitement des données (30 à 30n) auxquels ils sont reliés, un seul module maître étant actif à la fois, ledit module maître actif (10) étant destiné à coordonner des transferts de données brutes entre les modules de traitement des données (30 à 30n) selon une séquence programmée par le bus superviseur B1, les transferts étant effectués les uns après les autres par blocs successifs de taille déterminée et les caractéristiques des transferts étant distribuées entre les différents modules esclaves (20 à 20n), lesdits modules esclaves étant programmés par le bus superviseur B1 pour effectuer à chaque transfert les actions d'échanges de données sur le bus B2.

2. Réseau local d'intercommunication de modules de traitement de données selon la revendication 1, caractérisé en ce que le module maître (10) comprend des moyens (12) de mémorisation des caractéristiques des transferts, des moyens (13) de séquencement pour créer une horloge de synchronisation des échanges de données sur le bus B2 et pour gérer les transferts et des moyens (14) de pointage des transferts.

3. Réseau local d'intercommunication de modules de traitement de données selon la revendication 2, caractérisé en ce que les moyens (12) de mémorisation des caractéristiques des transferts comportent une mémoire RAM composée d'un premier sous-champ (121) destiné à contenir la taille des transferts et d'un deuxième sous champ (122) destiné à contenir la source du transfert et le code particularisant le transfert.

4. Réseau local d'intercommunication de modules de traitement de données selon l'une quelconque des revendications précédentes, caractérisé en ce que chaque module esclave (20 à 20n) comprend des moyens (22) de mémorisation des instructions à effectuer pour chaque transfert, des moyens (23) de séquencement pour gérer les fonctions du module esclave, des moyens (25) de génération d'adresses mémoire pour le module de traitement de données (30 à 30n) correspondant, une interface (19) de transfert des données entre le bus B2 et le module de traitement de données.

5. Réseau local d'intercommunication de modules de traitement de données selon la revendication 4, caractérisé en ce que les moyens (25) de génération d'adresses mémoire comportent une mémoire composée de deux sous champs (42, 43) destinée à contenir, pour chaque code particularisant chaque transfert, la zone de la mémoire (31) du module de traitement de données (30) concernée par le transfert courant, et un compteur d'adresses (47) associé à un comparateur (48) destiné à indiquer à un séquenceur (44) que le transfert de données courant est terminé.

6. Réseau local d'intercommunication de modules de traitement de données selon l'une quelconque des revendications précédentes, caractérisé en ce que les trois lignes destinées à transmettre les informations, du module maître (10) vers les modules esclaves (20 à 20n) sont des lignes (1) de contrôle pour transmettre les signaux issus des moyens de séquencement (13), des lignes (2) de description des transferts pour transmettre les caractéristiques des transferts des moyens de mémorisation (12) vers les modules esclaves (20 à 20n), des lignes (3) de données pour transmettre les données entre les modules de traitement de données (30 à 30n).

7. Réseau local d'intercommunication de modules de traitement de données selon l'une quelconque des revendications précédentes, caractérisé en ce que les caractéristiques des transferts sont la taille, la source et un code particularisant chaque transfert et en ce que les différentes actions d'échanges de données effectuées par les modules esclaves sont émettre des données, recevoir des données, et ne rien faire.

FIG.1

# FIG.2

**1ᵉʳ Transfert**
- N° de Phase : P1
- 11 blocs

**2ᵉᵐᵉ Transfert**
- N° de Phase : P9
- 30 blocs

**3ᵉᵐᵉ Transfert**
- N° de Phase : P4
- 25 blocs

A1  A2  A3  A4

EP 0 466 555 A1

# FIG.3

| | Nb.de blocs | N° d'émetteur | N° de phase |
|---|---|---|---|
| 1 | 11 | A1 | P1 |
| 2 | 30 | A1 | P9 |
| 3 | 25 | A4 | P4 |

Pointeur de transfert

# FIG.4

**A1**

| mémoire Instruction | Buffer à adresser |
|---|---|
| EMI | 3 |
| / | / |
| NOT | / |
| ... | ... |
| EMI | 1 |

P1 P2 P3 P4 P9

**A2**

| mémoire Instruction | Buffer à adresser |
|---|---|
| REC | 1 |
| / | / |
| REC | 3 |
| ... | ... |
| REC | 2 |

P1 P2 P3 P4 P9

**A3**

| mémoire Instruction | Buffer à adresser |
|---|---|
| REC | 4 |
| / | / |
| REC | 3 |
| ... | ... |
| REC | 1 |

P1 P2 P3 P4 P9

**A4**

| mémoire Instruction | Buffer à adresser |
|---|---|
| NOT | / |
| / | / |
| EMI | 5 |
| ... | ... |
| REC | 4 |

P1 P2 P3 P4 P9

FIG.5

EP 0 466 555 A1

# FIG.6

EP 0 466 555 A1

**Office européen des brevets**

**RAPPORT DE RECHERCHE EUROPEENNE**

Numero de la demande

EP  91 40 1815

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 100 468  (JEUMONT-SCHNEIDER)<br>* Page 2, ligne 29 - page 5, ligne 14 *<br>--- | 1,2 | H 04 L  12/40<br>G 06 F  13/36 |
| A | FR-A-2 605 767  (A. OLIVIER)<br>* Abrégé; page 4, lignes 36-40; page 9, lignes 5-18; page 19, ligne 1 - page 12, ligne 7 *<br>--- | 1,2 | |
| A | US-A-4 504 906  (H. ITAYA et al.)<br>* Abrégé; colonne 4, lignes 1-31; colonne 5, ligne 39 - colonne 6, ligne 31; figures 4,5 *<br>----- | 1,2 | |

**DOMAINES TECHNIQUES RECHERCHES (Int. Cl.5)**

G 06 F
H 04 L

Le présent rapport a été établi pour toutes les revendications

| Lieu de la recherche | Date d'achèvement de la recherche | Examinateur |
|---|---|---|
| LA HAYE | 18-10-1991 | STAESSEN B.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

15